# EUROPEAN PATENT SPECIFICATION

(11) **EP 2 929 692 B1**
(45) Date of publication and mention of the grant of the patent: **05.02.2020**
(21) Application number: 12795831.2
(22) Date of filing: 06.12.2012
(51) Int. Cl.: H04N 21/438, H04N 21/442

(54) **APPARATUS, METHOD AND SYSTEM FOR SELECTING PREFERRED TELEVISION NETWORKS**
VORRICHTUNG, VERFAHREN UND SYSTEM ZUR AUSWAHL BEVORZUGTER FERNSEHNETZWERKE
APPAREIL, PROCÉDÉ ET SYSTÈME DE SÉLECTION DE RÉSEAUX DE TÉLÉVISION PRÉFÉRÉS

(43) Date of publication of application: 14.10.2015
(73) Proprietor: Saronikos Trading and Services, Unipessoal Lda, 9000-48 Funchal, Madeira (PT)
(72) Inventor: RUIZ RODRIGUEZ, Ezequiel, Panama (PA)
(74) Representative: Metroconsult Srl
(86) International application number: PCT/EP2012/074709
(87) International publication number: WO 2014/086425

(56) References cited:
- WO-A1-2005/112312
- US-A1- 2003 018 973
- US-A1- 2007 266 403
- US-B1- 6 438 752
- Hitachi ET AL: "High-Definition Multimedia Interface, v.1.3a; Supplement 1, Consumer Electronics Control (CEC), pp. CEC-22 to CEC-45", , 10 November 2006 (2006-11-10), XP055592648, Retrieved from the Internet: URL:www.hdmiforum.org [retrieved on 2019-05-28]

## Description

The present invention relates to an apparatus, a system and a method adapted to receive television signals, in particular adapted to select preferred television networks with improved functionalities.

First of all, it must be pointed out that, in the present patent application, a television network is meant to be a television service transmitted by a broadcaster. For example, in Germany a television network may be ARD 1, another network may be ZDF, and so on.

It is known that modern television apparatuses allow receiving hundreds, or even thousands, of television networks, whether directly at the television set or through set-top-boxes connected thereto.

A user wanting to watch a television network or to change to another television network will first have to extricate him/herself from the multitude of television networks available. Since many television networks offer monothematic contents, and others, though not monothematic, offer contents which are normally deemed to be interesting only by certain users, in practice each different user will only use no more than about twenty television networks among the plurality thereof actually available.

This seeming simplification of the choice of the preferred television network is however complicated by the fact that an apparatus for receiving television signals is generally used by more than one user, so that the twenty or so television networks preferred by a certain user are not the preferred ones of another user; therefore, this problem cannot be solved by simply noting and storing the users' preferred television networks, because the selection would still have to be made among a hundred or so of preferred television networks.

In fact, if a house is inhabited by, for example, four users of the same television set, and each one (father, mother, son and daughter) has a different set of preferred television networks, by simply storing all such networks it would still be hard to navigate among the preferred television networks available, due to the large number of television networks (almost a hundred in this case) from which the user would have to choose his/her preferred one.

In addition, it is known that a user can save into the television set at least one list of preferred television networks, from which he/she can then select a desired television network and watch a current content thereof, i.e. content being broadcast at the time of selection of the television network. However, this does not allow to attain a quick selection of the desired television network among the plurality of television networks available, since the user will have to browse the menu of the television set to select the list of preferred television networks, and then select the desired television network among the many networks available in that list.

US 2007/0266403 discloses methods and systems to automatically identify preferred programming content based on subscriber-specific profile information generated at least in part from a subscriber's viewing history. This information is collected periodically in real time, e.g. on a 30-minute interval. Based on this information, the method deduces the top X channels that the subscriber is most interested in at each time interval based on the subscriber's viewing history. Afterwards, the top X channels are displayed on a TV screen as a rank-ordered list of channels.

US 6,438,752 discloses a method of program selection based on the past selection habits, or history, of an identified user. The method determines which channel is currently assigned a program corresponding to the highest reception frequency for the first selection preference in a past reception history of the identified user for the current time period. For a channel to be part of the channel selection history of the identified user it must remain tuned to for at least a predetermined period of time.

It is therefore one object of the present invention to provide an apparatus, a system and a method adapted to receive television signals, in particular adapted to select preferred television networks with improved functionalities, which offer the user the possibility of quickly choosing his/her preferred television networks.

It is another object of the present invention to provide an apparatus, a system and a method adapted to receive television signals, in particular adapted to select preferred television networks with improved functionalities, which offer the user an automatic list of preferred television networks.

It is a further object of the present invention to provide an apparatus, a system and a method adapted to receive television signals, in particular adapted to select preferred television networks with improved functionalities, which can select television networks among a plurality of sources.

These and other objects of the invention are achieved through an apparatus, a system and a method adapted to receive television signals, in particular adapted to select preferred television networks with improved functionalities, as set out in the appended claims, which are an integral part of the present description.

In short, an apparatus, a system and a method are described herein which are adapted to receive television signals and to select preferred television networks through the use of a processor for controlling the functions of said apparatus, a tuner for tuning the television signal, a television signal video decoder for producing a video signal, a switching circuit for switching the television signals to be reproduced on a display, at least a memory for storing information about preferred television networks, a clock for counting time and synchronizing machine instructions, and also being adapted to be connected to or to comprise a display for reproducing television signals, characterized in that the processor stores into the memory information about the preferred television networks, comprising a frequency of vision and subdivided according to predetermined time slots, the same processor allowing to select or display the preferred television networks on the display depending on the frequency of vision and the time slot.

The scope of protection of the present invention is as defined in the appended claims. Any embodiments not falling within such scope should be construed as examples which do not describe parts of the invention.

The above objects will become more apparent from the detailed description of an apparatus, a system and a method adapted to receive television signals, in particular adapted to select preferred television networks with improved functionalities, according to the present invention, with particular reference to the annexed drawings, wherein:
- Figure 1 shows an example of a block diagram of an apparatus according to the present invention;
- Figure 2 shows an example of a list of preferred television networks according to the present invention;
- Figures 3a, 3b and 3c show a further example of a list of preferred television networks according to the present invention;
- Figure 4 shows one embodiment of a system comprising the apparatus and external television receivers connected thereto;
- Figures 5a, 5b and 5c show a further example of a list of preferred television networks according to the present invention.

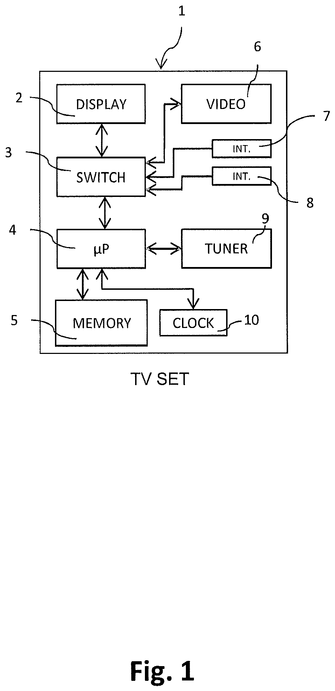

With reference to Figure 1, there is shown a preferred embodiment of the invention of an apparatus 1 comprising a display 2, a switching circuit 3 for switching the television signals to be reproduced on the display 2 and directing control signals to interfaces 7 and 8, and at least one processor 4, in particular incorporating a microprocessor.

The apparatus 1 also comprises at least one memory 5, e.g. of the RAM ("Random Access Memory") type, and a video decoder 6 for decoding the television video signal supplied by a tuner 9 (connection not shown for simplicity). In addition to decoding the digital video signal, the video decoder 6 also processes said signal so as to make it suitable to be supplied to the display 2; the interfaces 7 and 8 are, for example, SCART ("Syndicat des Constructeurs d'Appareils Radiorécepteurs et Téléviseurs"), HDMI ("High Definition Multimedia Interface"), Wi-Fi connection, or optical interfaces, or the like; the tuner 9, in addition to at least tuning the television signal (channel), also extracts from the multiplex that digital signal, e.g. coded in MPEG2 ("Moving Picture Experts Group") or MPEG4, which corresponds to the television network to be tuned into. The apparatus 1 also comprises a clock 10 for counting time and synchronizing machine instructions.

The switching circuit 3 is connected to the processor 4, the display 2, the video decoder 6, and the interfaces 7 and 8; it is also equipped with a processor of its own (not shown), which is adapted to control the input television signals (normally at video frequency) coming from the interfaces 7 and 8, as well as to handle any control signals sent to peripherals of the apparatus 1. In addition, the switching circuit 3 is driven by the processor 4, which controls and decides which television signal, which may come from different television receivers, must be transferred to the display 2 and displayed thereon.

The apparatus 1 further comprises a control menu facility, shown on the display 2, through which a user can modify, by using a control device (normally a remote control device), the settings and functions of the apparatus 1.

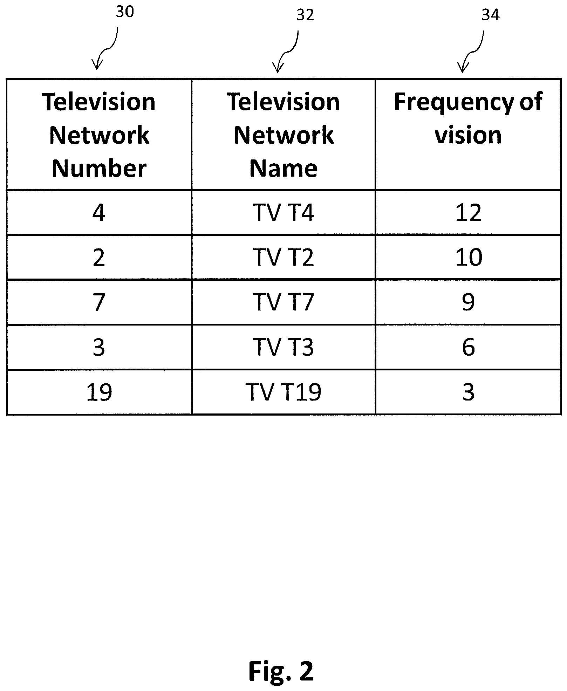

With reference to Fig. 2, there is shown how the processor 4 allows preferred television networks to be automatically stored. In practice, the processor 4 stores into the memory 5 a frequency of vision 34 (i.e. the number of vision occurrences over time) for each television network that was watched in the past, and then associates and saves into the memory 5, for each television network for which a frequency of vision 34 has been stored, also a television network number 30 (program number), through which a user can select the television network, e.g. by using a remote control device, and a television network name 32 of the television network watched in the past.

More in detail, the television network number 30 may correspond to the LCN number ("Logical Channel Numbering") of the corresponding television network or to the stored program number, which corresponds to the number of the associated key on the control device, in the event that program numbers differ from LCN numbers.

The frequency of vision 34 is stored automatically, without needing the user's intervention, during the normal vision of the apparatus 1. In fact, the processor 4 calculates how many times a certain television network is selected. In particular, the processor 4 will only increment the number relating to the frequency of vision 34 when a certain television network has been watched for at least a predetermined minimum time, e.g. at least ten minutes. The memory 5 contains the aforementioned information as shown in Fig. 2, i.e. as lists of preferred television networks automatically created according to the respective frequency of vision 34.

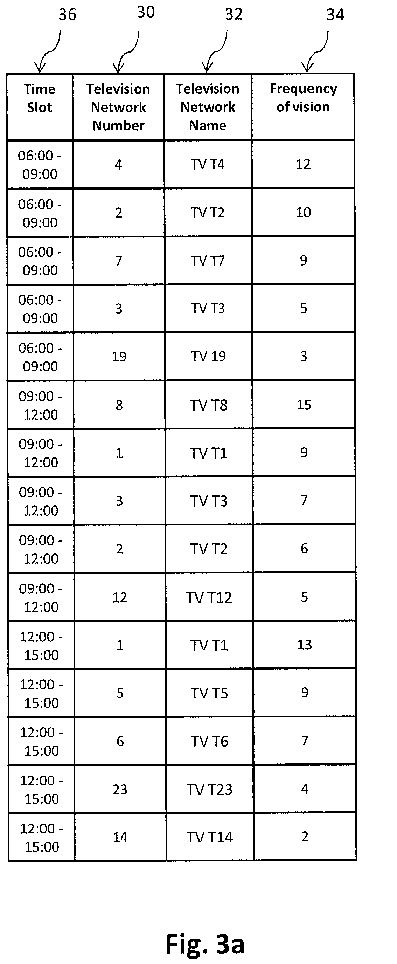

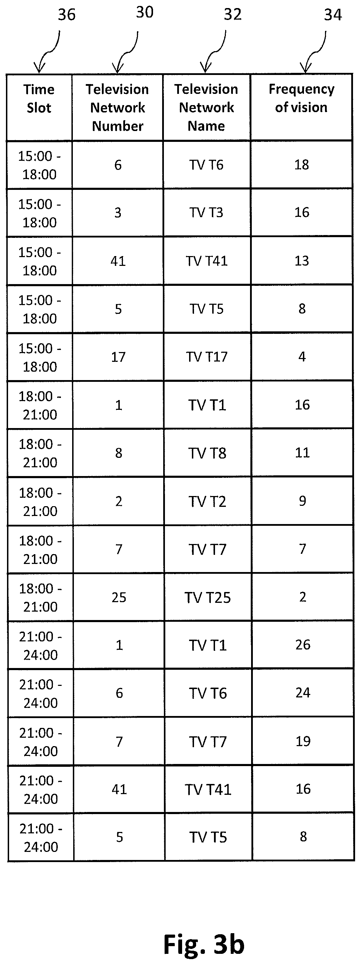

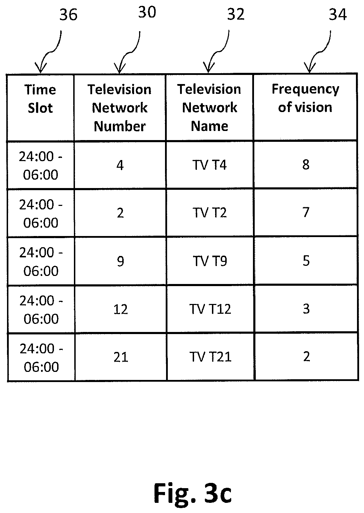

With reference to Figures 3a, 3b and 3c, the apparatus 1 and the method according to the invention also associate said lists of preferred television networks, containing the television network number 30, the television network name 32 and the frequency of vision 34, to time slots 36 within which the television networks were watched for at least a predetermined minimum time, sorting them in decreasing order according to the frequency of vision 34 with which the television network were watched in the past within a certain time slot 36.

It is important to specify that a television network name 32, a frequency of vision 34 and a time slot 36 are associated with each television network number 30.

For example, there may be seven time slots 36, i.e. from six to nine a.m., when possibly the preferred television networks are those which broadcast news, from nine to twelve a.m., when the preferred television networks are likely those which broadcast entertainment contents for housewives and retired people, from midday to three p.m., from three to six p.m., when possibly the preferred television networks are those which broadcast contents for children, from six to 9 p.m., when the preferred television network are likely those which broadcast quiz shows, from nine p.m. to midnight, when the preferred television networks are likely those which broadcast movies, and finally the time slot from midnight to six a.m.

Such time slots 36 are also stored in the memory 5.

Still with reference to Figures 3a, 3b and 3c, there are shown five television networks for each time slot 36; however, this is only an example, in that the number of television network that a user may watch within a given time slot 36 is variable. It is clear that the number of preferred television networks stored depends on the size of the memory 5. For this reason, it is conceivable to use, if needed, a plurality of memories 5 for increased storage capacity.

The user may also be given the possibility of deleting the memory 5, so that, starting from the next use of the apparatus 1, the lists of the preferred television networks will be created anew, with respective statistics of frequency of vision 34 for each time slot 36.

The time slots 36 are calculated by the processor 4 with the help of the clock 10, which provides information about the time of day. The precision of the clock may be guaranteed setting it, time by time, with the time information received by the apparatus 1 and extracted from a television signal service, like the teletext.

When the user starts watching a television network, the processor 4 will communicate with the clock 10 to count a predetermined minimum period of time, which will be useful to establish if that specific television network can be considered to be a preferred one and hence be stored into the memory 5.

For example, if the period of time is ten minutes, the processor 4 will wait ten minutes before storing the television network number 30 and the television network name 32 into the corresponding time slot 36. Knowing the current time of day of vision of the television network, thanks to the clock 10, the processor 4 can store the information into the appropriate time slot 36, i.e. the one corresponding to the current time of vision. For example, if a television network is being watched at 11:05 a.m., the processor 4 will be given this information by the clock 10 and will store the above-mentioned information about the television network into the memory 5 with reference to the time slot 36 from nine to twelve a.m. Of course, it may happen that the vision of a television network begins in a certain time slot and ends in the next time slot. In such a case, the time slot taken into consideration will conveniently be the one in which the program began.

Furthermore, if the television network number 30 and the television network name 32 are not yet present in the memory 5, then the processor 4 will create a new record by storing the (numerical) value "1" into the field corresponding to the frequency of vision 34. On the contrary, if the television network number 30 and the television network name 32 are already present in the memory 5, then the processor 4 will increment by one unit the value contained in the field corresponding to the frequency of vision 34.

The predetermined minimum period of time, which is useful to the processor 4 in order to be able to decide whether the television network is a preferred one or not, may be set *a priori* by the manufacturer of the apparatus 1, or else it may be set by the user through the control menu of the apparatus 1. In this latter case, the user can personally decide how much time must elapse before a television network can become one of his/her preferred television networks.

Also the time slots 36 may be either set *a priori* by the manufacturer of the apparatus 1 or chosen by the user through the control menu of the apparatus 1 according to his/her preferences.

In a preferred embodiment of the invention, the apparatus 1 and the method according to the invention may have the apparatus 1, when turned on by the user, display that preferred television network whose value of frequency of vision 34 is highest among all of the preferred television networks stored within the same time slot 36 corresponding to the current time of vision. For example, still with reference to Fig. 3a, if a user turns on the apparatus 1 at 10:30 a.m., the apparatus 1 will automatically tune to the television network called "TV T8", designated by number 8 and having the highest frequency of vision 34 (15 in this example) among all of the television networks stored within the same time slot 36 (from nine to twelve a.m. in this example). This means that the apparatus 1, when turned on, will display that television network which has been watched most often within a given time slot 36.

In the above-described example, the apparatus 1 and the method according to the invention provide that, when the apparatus 1 is turned on, the processor 4 reads the information about the preferred television networks in the memory 5 and extracts the television network number 30 associated with the highest frequency of vision 34 among all of the preferred television networks stored within the same time slot 36 corresponding to the current time of vision. As aforementioned, the clock 10 supplies the current time of vision to the processor 4, which can thus retrieve the information about the television networks stored within that time slot 36 which includes the current time of vision.

Subsequently, the processor 4 commands the tuner 9 to tune to the selected television network and, once tuning has occurred, the television signal is subjected to video decoding through the video decoder 6, which processes the video signal in such a way as to make it suitable to be supplied to the display 2 through the switching circuit 3.

All these steps may nonetheless be controlled by the processor 4.

Furthermore, when a user is "zapping" through the television networks that follow the first one that was tuned to upon turning on the apparatus, the apparatus 1 will also in this case take into consideration the time slot 36 corresponding to the current time of vision and, at every change of television network, it will display the television network with the frequency of vision 34 immediately lower than that of the previously tuned television network. For example, still with reference to Fig. 3b, if a user turns on the apparatus 1 at 21:30, then said apparatus 1 will tune to the television network having the highest frequency of vision 34 within that time slot 36 (from 9 p.m. to midnight in this example), i.e. the television network "TV T1", because that television network has a frequency of vision 34 of 26 (which is the highest value among all television networks within that time slot 36). At this point, if the user changes television network by operating a "next program" key on a remote control device or on the apparatus 1 itself, then the apparatus 1 will tune to the television network named "TV T6", because its frequency of vision 34 is 24, i.e. a value immediately lower than that of the previously tuned television network. Likewise, if the user changes television network by operating a "previous program" key on a remote control device or on the apparatus 1 itself, then the apparatus 1 will tune to the television network having a frequency of vision 34 immediately higher than that of the previously tuned television network.

When the user makes a number of television network changes equal to the number of television networks included in the list of the corresponding time slot 36, at the next change of television network the apparatus will return to the first television network displayed, i.e. the one with the highest frequency of vision 34; this means that television network changes occur cyclically through the list of television networks for a given time slot 36.

Of course, it is also conceivable that the apparatus 1, when turned on, will tune to a specific network, whether directly selected by pressing one or more keys on a remote control device or on the apparatus 1 itself, and that the sequence of preferred television networks within that time slot will only be used starting from the moment when the user begins "zapping".

In the event that, when the apparatus 1 is turned on, the memory 5 contains no information about preferred television networks, then the apparatus 1 will by convention, as decided by the manufacturer of the apparatus 1, tune to the television network having the program number "1".

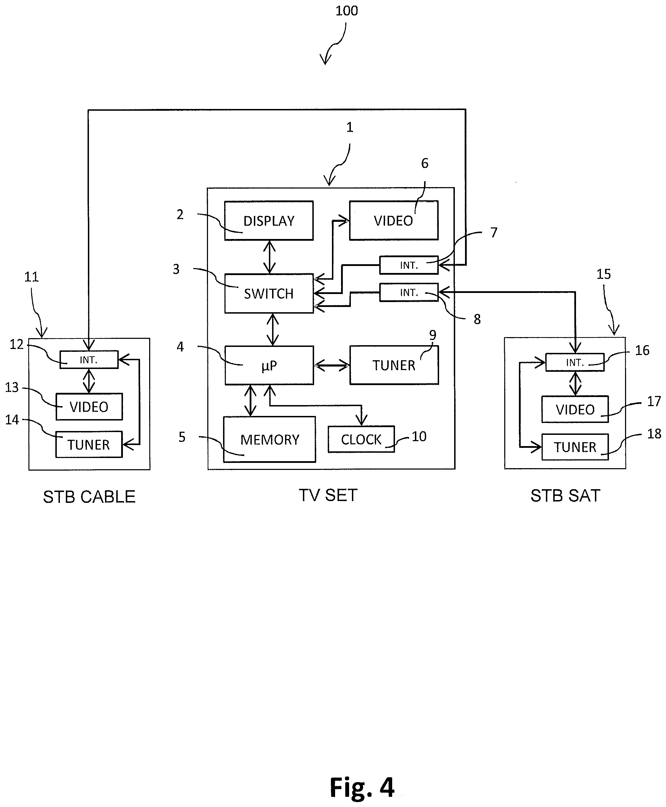

In another embodiment described with reference to Fig. 4, a system 100 comprises the apparatus 1 and external television receivers 11 and 15, wherein the apparatus 1 is connected to the two external television receivers 11 and 15, in particular two different STB's ("Set-Top-Boxes") 11 and 15 through the interfaces 7 and 8. The STB 11 comprises at least one interface 12, a video decoder 13 and a tuner 14. Likewise, the STB 15 comprises at least one interface 16, a video decoder 17 and a tuner 18. In this embodiment, the processor 4 also stores the preferred television networks associated with the STB's 11 and 15; in this case, the switching circuit 3 simultaneously leaves open the connections to the interfaces 7 and 8, so that the information about the television networks coming from the STB's 11 and 15 can be used by the processor 4 for storing information about the preferred television networks into the memory 5. As aforesaid, the connection between the apparatus 1 and the two STB's 11 and 15 may be established through the interfaces 7,8,12 and 16, in particular connected by means of a SCART cable, an HDMI cable, an optical cable, Wi-Fi connection or the like.

The control data for the two STB's 11 and 15 and for the video signals returned by them, which are exchanged and addressed among the three apparatuses 1, 11 and 15, enter directly the control "buses" of the processors 4 included in the three apparatuses 1, 11 and 15.

In this manner, thanks to such a master (apparatus 1) / slaves (STB's 11 and 15) configuration, the master takes control over the tuning of both slaves and, upon pressing the "next program" key or the "previous program" key on the remote control device of the apparatus 1, or on the apparatus 1 itself, it provides for tuning (as the case may be) either one of the two STB's 11 and 15 to the preferred "next program" or "previous program", while at the same time controlling the switching circuit 3 to allow the display 2 to receive the video signal coming from the STB 11 or 15 that must tune into the television network preferred by the user at that time of day.

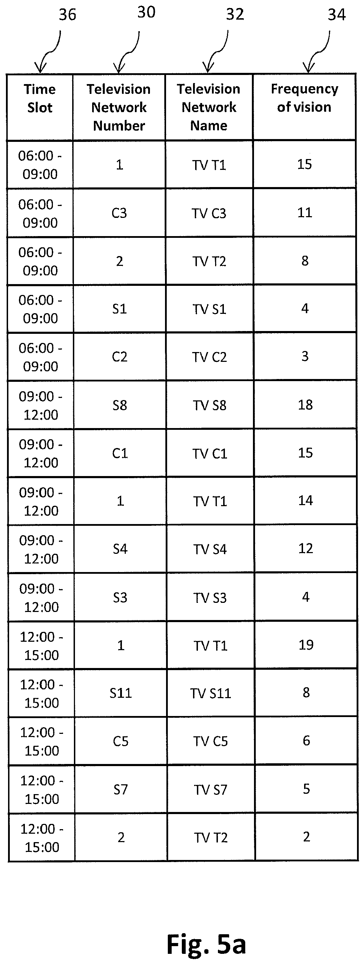

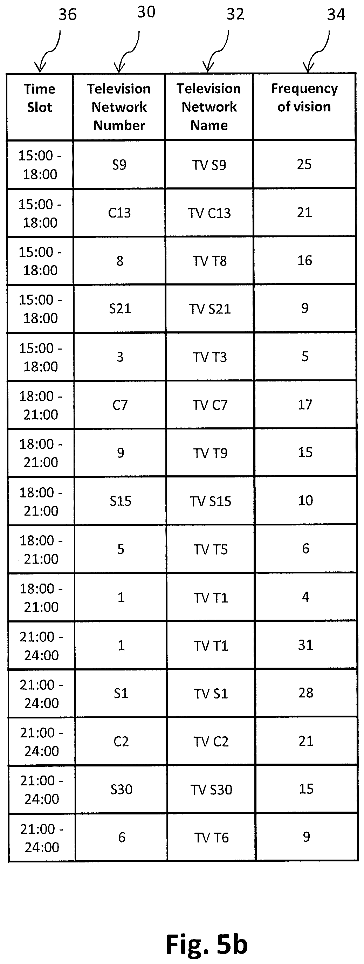

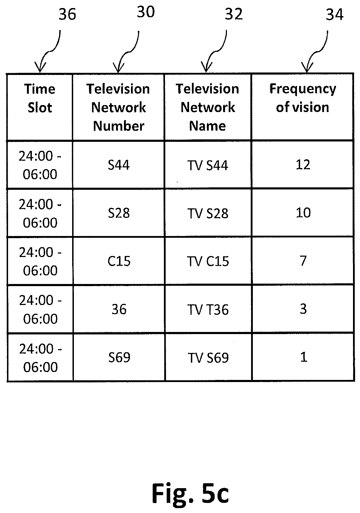

With reference to Figures 5a, 5b and 5c, the memory 5 stores, for example, information about the television networks received by the apparatus 1 and by the STB's 11 and 15. In particular, the television network number 30 is different depending on whether it is a television network received by the apparatus 1 or a television network received by the STB 11 or by the STB 15. In the example of Fig. 4, the STB 11 is a cable STB, i.e. it receives the television networks of the American "Cable TV", whereas the STB 15 is a satellite STB, i.e. it receives the television networks broadcast by one or more satellite. In the example of Figs. 5a, 5b and 5c, the television network number 30 consists of a simple number for television networks received by the apparatus 1, while it is an alphanumeric combination for television networks received by the STB's 11 and 15. In practice, for the STB 11 there will be, for example, a value "C3", while for the STB 15 there will be, for example, a value "S1". This distinction is useful to avoid confusing the television networks of the apparatus 1 with those of the STB's 11 and 15.

This distinction is made by the processor 4; in fact, when a television network received by the STB's 11 and 15 must be stored, the processor 4 will just receive a television network number which is only known by the STB 11 or 15 that is transmitting it. It will thus be the processor 4 that will modify the received television network number by adding an alphanumeric character univocally indicating the STB 11 or 15. Finally, it will store the new television network number 30, comprising a plurality of alphanumeric characters, into the memory 5 together with the television network name 32 and the corresponding frequency of vision 34 for a given time slot 36.

In the embodiment of Fig. 4, the apparatus 1, the system 100 and the method according to the invention also have the apparatus 1, when turned on by the user, display that preferred television network whose value of frequency of vision 34 is highest among all of the preferred television networks stored within the same time slot 36 corresponding to the current time of vision. For example, still with reference to Fig. 5a, if a user turns on the apparatus 1 at 11:30 a.m., the apparatus 1 will automatically tune the television network called "TV S8", designated by number S8 and having the highest frequency of vision 34 (18 in this example) among all of the television networks stored within the same time slot 36 (from nine to twelve a.m. in this example). This means that the apparatus 1 will display that television network which has been watched most often within a given time slot 36.

In the above-described example, the apparatus 1, the system 100 and the method according to the invention provide that, when the apparatus 1 is turned on, the processor 4 reads the information about the preferred television networks from the memory 5 and extracts the television network number 30 associated with the highest frequency of vision 34 among all of the preferred television networks stored within the same time slot 36 corresponding to the current time of vision.

Subsequently, if the preferred television network is directly received by the apparatus 1, i.e. if the processor 4 recognizes that the television network number 30 is a simple number, then the processor 4 will command the tuner 9 to tune the selected television network and, once tuning has occurred, the television signal will be subjected to video decoding through the video decoder 6, which will process the video signal in such a way as to make it suitable to be supplied to the display 2 through the switching circuit 3.

Otherwise, if the preferred television network is received by the STB 11, i.e. if the processor 4 recognizes that the television network number 30 consists of an alphanumeric string starting with a letter corresponding to the STB 11, then the processor 4 will command the tuner 14 to tune to the selected television network through the connection created by means of the interfaces 7 and 12; once tuning has occurred, the television signal will be subjected to video decoding through the video decoder 13, which will process the video signal in such a way as to make it suitable to be supplied to the display 2 through the switching circuit 3, which, as aforesaid, will leave open the connections to the interfaces 7 and 8, so that the processor 4 can communicate with the tuners 14 and 18 of the STB's 11 and 15 and with the video outputs.

If, on the contrary, the preferred television network is received by the STB 15, i.e. if the processor 4 recognizes that the television network number 30 consists of an alphanumeric string starting with a letter corresponding to the STB 15, then the processor 4 will command the tuner 18 to tune the selected television network through the connection established with the interfaces 8 and 16; once tuning has occurred, the television signal will be subjected to video decoding through the video decoder 17, which will process the video signal in such a way as to make it suitable to be supplied to the display 2 through the switching circuit 3.

In these two latter cases, the processor 4 will automatically drive the switching circuit 3 so that the latter will allow transmission of the correct television signal (video) received by the STB's 11 and 15.

Furthermore, the alphanumeric string adopted for the television network number 30 only represents one possible solution for distinguishing between television networks coming from different television receivers. Another solution is to identify the external television receivers 11 and 15 through the name of the interface 7 or 8 of the apparatus 1 to which said external television receivers 11 and 15 are connected.

All of the above steps may nonetheless be controlled by the processor 4. Also in this case when external television receivers are connected to the apparatus 1, in the event that, when the apparatus 1 is turned on, the memory 5 contains no information about preferred television networks, then the apparatus 1 will by convention, as decided by the manufacturer of the apparatus 1, tune to the television network having the program number "1", corresponding to the television network stored in association with the program selection key 1 of the apparatus 1, not to that of the external television receivers 11 and 15. Finally, the functionality described herein for automatic display of preferred television networks subdivided according to time slots 36, as described in reference to the present invention, may be disabled at any time by the user, so as to cause the apparatus 1 to operate like a normal television receiver according to the prior art.

The method according to the invention can be implemented through a computer product which can be loaded into a memory of the apparatus 1 and which comprises portions of software code adapted to implement the method by using existing hardware.

The features of the present invention, as well as the advantages thereof, are apparent from the above description.

A first advantage of the apparatus, system and method according to the present invention is that the user is given the possibility of quickly choosing preferred television networks.

A second advantage of the apparatus, system and method according to the present invention is that the user is automatically given a list of preferred television networks.

A third advantage of the apparatus, system and method according to the present invention is that the user is automatically offered the vision of preferred television networks.

A further advantage of the apparatus, system and method according to the present invention is that television networks can be selected among a plurality of different television receivers.

The apparatus, system and method adapted to receive television signals, in particular adapted to select preferred television networks with improved functionalities, may be subject to many possible variations without departing from the novelty spirit of the inventive idea; it is also clear that in the practical implementation of the invention the illustrated details may have different shapes or be replaced with other technically equivalent elements.

For example, the apparatus, the system and the method adapted to receive television signals, in particular adapted to select preferred television networks with improved functionalities, may provide for showing on the display the list of preferred television networks stored for the time slot corresponding to the current time of vision, sorted according to their frequency of vision (in decreasing order from top to bottom), so that a user can select from such displayed list which television network to display, or else they may provide for always showing the national television networks at the top of the list of preferred television networks; for example, if two television networks have the same frequency of vision, then the national television network will be displayed first on the screen.

## Claims

1. An apparatus (1) adapted to receive television signals and to select preferred television networks, comprising:
- a processor (4) for controlling the functions of said apparatus (1),
- a tuner (9) for at least tuning said television signal,
- a video decoder (6) for decoding said television signals in order to at least produce a video signal,
- at least a memory (5) for storing information about said preferred television networks,
- a clock (10) for counting time and synchronizing machine instructions,
said apparatus (1) comprising or being adapted to be connected to a display (2) for reproducing said television signals, wherein
- said processor (4) stores into said memory (5) said information about said preferred television networks comprising a television network number (30), a television network name (32), a frequency of vision (34) and predetermined time slots (36) which are stored into the memory (5), wherein one of said television network names (32), one of said frequencies of vision (34) and one of said time slots (36) are associated with each one of said television network numbers (30), and wherein said frequency of vision (34) is subdivided according to said predetermined time slots (36), wherein the time slots are chosen by the user through a control menu of said apparatus (1) according to his/her preferences;
- said processor (4) allows to select or display said preferred television networks on said display (2) based on said frequency of vision (34) and on said time slot (36) within which said apparatus (1) is being used, wherein
the apparatus comprises control means which, upon issuing a specific command, change the television network to be displayed, and wherein said processor (4) effects the change of said television network by acting upon said tuner (9,14,18), so that the latter will tune a preferred television network having a higher or lower frequency of vision (34), depending on the control signal received, than the one previously displayed, among all of said preferred television networks stored within the same time slot (36) corresponding to the current time slot of vision, wherein
the processor (4) will only increment a number relating to the frequency of vision (34) when a certain television network has been watched for at least a predetermined minimum of time.

2. An apparatus (1) according to claim 1, wherein said frequency of vision (34) is calculated by said processor (4) while a user is watching a television network.

3. An apparatus (1) according to one or more of the preceding claims, wherein said processor (4) stores into said memory (5) said information about the visualization of said television network, if said television network has been displayed on said display (2) for at least a predetermined minimum period of time, in particular set by a manufacturer of said apparatus (1) or chosen by a user through a control menu facility of said apparatus (1).

4. An apparatus (1) according to one or more of the preceding claims, wherein said current time of vision is supplied to said processor (4) by said clock (10).

5. A system (100) including an apparatus (1) according to one or more of the preceding claims and at least one external television receiver (11,15) wherein said apparatus (1) is connected to said at least one external television receiver (11,15) through one of a pair of interfaces (7, 12; 8,16), and
wherein said processor (4) stores into the memory (5) said information about said preferred television networks tuned into by a tuner (14,18) of said external television receiver (11,15), or
wherein said processor (4) controls said tuner (14,18) of said external television receiver (11,15) through a connection that connects said interfaces (7, 12; 8,16).

6. A system (100) according to claim 5, **characterized in that** it comprises a switching circuit (3) for switching said television signals to be reproduced on a display (2), which routes control signals coming from said processor (4) towards at least said external television receiver (11,15) through said one of a pair of interfaces (7, 12; 8,16) and sends to said display (2), under the control of said processor (4), one of the video signals available at one of said external television receivers (1, 11, 15).

7. A system (100) according to claim 5 or 6, wherein said processor (4) controls said tuner (9,14,18) in such a way that it will tune automatically, upon turning on said apparatus (1), to said preferred television network having said highest frequency of vision (34) among all of said preferred television networks stored within the same time slot (36) corresponding to the current time slot of vision.

8. A method adapted to select preferred television networks, said method comprising the steps of:
- storing into a memory (5), through a processor (4), information about said preferred television networks comprising a television network number (30), a television network name (32), a frequency of vision (34) and predetermined time slots (36) which are stored into the memory (5), wherein one of said television network names (32), one of said frequencies of vision (34) and one of said time slots (36) are associated with each one of said television network numbers (30), and wherein said frequency of vision (34) is subdivided according to predetermined time slots (36), wherein the time slots are chosen by the user through a control menu of said apparatus (1) according to his/her preferences;
- selecting and then displaying, through said processor (4), said preferred television networks on a display (2) based on said frequency of vision (34) and on said time slot (36) within which said apparatus (1) is being used, wherein
said method further provides for using control means which, upon issuing a specific command, change the television network to be displayed, and wherein the change of said television network is effected by tuning to a preferred television network having a higher or lower frequency of vision (34), depending on the control signal received, than the one previously displayed, among all of said preferred television networks stored within the same time slot (36) corresponding to the current time slot of vision, wherein
the processor (4) will only increment a number relating to the frequency of vision (34) when a certain television network has been watched for at least a predetermined minimum of time.

9. A method according to claim 8, said method further comprising the step of calculating said frequency of vision (34), through said processor (4), while a television network is displayed, and
wherein said method further provides for storing into said memory (5), through said processor (4), said information about said television network, if said television network has been displayed on said display (2) for at least a predetermined minimum period of time, in particular set by a manufacturer of said apparatus (1) or chosen by a user through a control menu facility of said apparatus (1).

10. A method according to one or more of the preceding method claims, wherein said method further provides for storing into said memory (5), through said processor (4), said information about said preferred television networks, said preferred television networks being tuned into by at least one tuner (14,18) of an external television receiver (11,15), and
wherein said method further provides for controlling, through said processor (4), said at least tuner (14,18) of said at least external television receiver (11,15).

11. A method according to one or more of the preceding method claims, wherein said method further provides for controlling said tuner (9,14,18), through said processor (4), in such a way that it will tune automatically, upon turning on said apparatus (1), to said preferred television network having said highest frequency of vision (34) among all of said preferred television networks stored within the same time slot (36) corresponding to the current time slot of vision.

12. A method according to one or more of the preceding method claims, wherein said method further provides for sorting said preferred television networks, within each time slot (36), in decreasing order based on said frequency of vision (34), and
wherein said method further provides for displaying, at every change of television network, said television network having a frequency of vision (34) immediately lower than that of said preferred television network previously tuned to, while taking into account said time slot (36) corresponding to a current time of vision.

13. A computer product which can be loaded into a memory of said apparatus (1), comprising instructions adapted to implement the method according to one or more of claims 8 to 12.

## Patentansprüche

1. Vorrichtung (1) eingerichtet zum Empfangen von Fernsehsignalen und zum Auswählen bevorzugter Fernsehnetzwerke, umfassend:
- einen Prozessor (4) zum Steuern der Funktionen der Vorrichtung (1),
- einen Tuner (9) zum zumindest Einstellen des Fernsehsignals,
- einen Videodecoder (6) zum Decodieren der Fernsehsignale, um zumindest ein Videosignal zu erzeugen,
- mindestens einen Speicher (5) zum Speichern von Informationen über die bevorzugten Fernsehnetzwerke,
- eine Uhr (10) zum Zählen der Zeit und zum Synchronisieren von Maschinenbefehlen, wobei die Vorrichtung (1) umfasst eine Anzeige (2) oder eingerichtet ist mit einer zum Wiedergeben der Fernsehsignale verbunden zu werden, wobei
- der Prozessor (4) speichert in den Speicher (5) die Informationen über die bevorzugte Fernsehnetzwerke umfassend eine Fernsehnetzwerknummer (30), einen Fernsehnetzwerkname (32), eine Sichtfrequenz (34) und vorbestimmte Zeitschlitze (36), welche in dem Speicher (5) gespeichert sind, wobei einer der Fernsehnetzwerknamen (32), eine der Sichtfrequenzen (34) und einer der Zeitschlitze (36) sind jeder der Fernsehnetzwerknummern (30) zugeordnet, und wobei die Sichtfrequenz (34) ist entsprechend den vorbestimmten Zeitschlitzen (36) unterteilt, wobei die Zeitschlitze werden vom Benutzer durch ein Steuermenu der Vorrichtung (1) entsprechend seiner/ihrer Vorlieben ausgewählt;
- der Prozessor (4) ermöglicht das Auswählen oder Anzeigen der bevorzugten Fernsehnetzwerke auf der Anzeige (2) basierend auf der Sichtfrequenz (34) und dem Zeitschlitz (36), in dem die Vorrichtung (1) verwendet wird, wobei die Vorrichtung Steuermittel umfasst, die bei Abgabe eines bestimmten Befehls das anzuzeigende Fernsehnetzwerk ändern, und wobei der Prozessor (4) bewirkt die Änderung des genannten Fernsehnetzwerks durch Einwirken auf den Tuner (9, 14, 18), sodass dieser ein bevorzugtes Fernsehnetzwerk mit einer höheren oder niedrigeren Sichtfrequenz (34) als der zuvor angezeigten in Abhängigkeit von dem empfangenen Steuersignal einstellt, unter allen bevorzugten Fernsehnetzwerken, die in demselben Zeitschlitz (36) gespeichert sind, der dem aktuellen Zeitschlitz des Sehens entspricht, wobei der Prozessor (4) eine Zahl bezüglich der Sichtfrequenz (34) nur erhöht, wenn ein bestimmtes Fernsehnetzwerk für zumindest einen vorbestimmten Mindestzeitraum gesehen wurde.

2. Vorrichtung (1) nach Anspruch 1, wobei die Sichtfrequenz (34) von dem Prozessor (4) berechnet wird, während ein Benutzer ein Fernsehnetzwerk sieht.

3. Vorrichtung (1) nach einem oder mehreren der vorhergehenden Ansprüche, wobei der Prozessor (4) die Information über die Visualisierung des Fernsehnetzwerks in dem Speicher (5) speichert, wenn das Fernsehnetzwerk auf der Anzeige (2) für mindestens einen vorbestimmten Mindestzeitraum angezeigt wurde, der insbesondere von einem Hersteller der Vorrichtung (1) festgelegt oder von einem Benutzer über eine Steuermenüeinrichtung der Vorrichtung (1) ausgewählt wird.

4. Vorrichtung (1) nach einem oder mehreren der vorhergehenden Ansprüche, wobei die aktuelle Sichtzeit von der Uhr (10) an den Prozessor (4) geliefert wird.

5. System (100) umfassend die Vorrichtung (1) gemäß einem oder mehreren der vorhergehenden Ansprüche und mindestens einen externen Fernsehempfänger (11, 15), wobei die Vorrichtung (1)ist mit mindestens einem externen Fernsehempfänger (11, 15) über ein Paar von Schnittstellen (7, 12; 8, 16) verbunden ist, und
wobei der Prozessor (4) die Informationen über die bevorzugten Fernsehnetzwerke, die von einem Tuner (14, 18) des externen Fernsehempfängers (11, 15) eingestellt wurden, in den Speicher (5) speichert, oder
wobei der Prozessor (4) den Tuner (14, 18) des externen Fernsehempfängers (11, 15) über eine Verbindung steuert, welche die Schnittstellen (7, 12; 8, 16) verbindet.

6. System (100) nach Anspruch 5, **dadurch gekennzeichnet, dass** es eine Umschaltschaltung (3) zum Umschalten der auf einer Anzeige (2) wiederzugebenden Fernsehsignale aufweist, welche Steuersignale weiterleitet, die von dem Prozessor (4) über das Paar von Schnittstellen (7, 12; 8, 16) zu mindestens dem externen Fernsehempfänger (11, 15) geht und unter der Steuerung des Prozessors (4) eines der an einem der Fernsehempfänger (1, 11, 15) verfügbaren Videosignale zu der Anzeige (2) sendet.

7. System (100) nach einem der Ansprüche 5 oder 6, wobei der Prozessor (4) den Tuner (9, 14, 18) so steuert, dass er beim Einschalten der Vorrichtung (1) automatisch einstellt auf das bevorzugte Fernsehnetzwerk mit der höchsten Sichtfrequenz (34) unter allen bevorzugten Fernsehnetzwerken, die in demselben Zeitschlitz (36) gespeichert sind, der dem aktuellen Zeitschlitz des Sehens entspricht.

8. Verfahren zum Auswählen bevorzugter Fernsehnetzwerke, wobei das Verfahren die folgenden Schritte umfasst:
- Speichern in einen Speicher (5) durch einen Prozessor (4) von Informationen über die bevorzugten Fernsehnetzwerke, umfassend eine Fernsehnetzwerknummer (30), einen Fernsehnetzwerkname (32), eine Sichtfrequenz (34) und vorbestimmte Zeitschlitze (36), welche in dem Speicher (5) gespeichert sind, wobei einer der Fernsehnetzwerknamen (32), eine der Sichtfrequenzen (34) und einer der Zeitschlitze (36) sind jeder der Fernsehnetzwerknummern (30) zugeordnet, und wobei die Sichtfrequenz (34) ist entsprechend den vorbestimmten Zeitschlitzen (36) unterteilt, wobei die Zeitschlitze werden vom Benutzer durch ein Steuermenu der Vorrichtung (1) entsprechend seiner/ihrer Vorlieben ausgewählt;
- Auswählen und dann Anzeigen durch den Prozessor (4), die bevorzugten Fernsehnetzwerke auf der Anzeige (2) basierend auf der Sichtfrequenz (34) und dem Zeitschlitz (36), in dem die Vorrichtung (1) verwendet wird, wobei das Verfahren weiter vorsieht das Nutzen von Steuermittel, die bei Abgabe eines bestimmten Befehls das anzuzeigende Fernsehnetzwerk ändern, und wobei das Ändern des Fernsehnetzwerks ist bewirkt durch das Einstellen auf ein bevorzugtes Fernsehnetzwerk mit einer höheren oder niedrigeren Sichtfrequenz (34), als der zuvor angezeigten, in Abhängigkeit von dem empfangenen Steuersignal, unter allen bevorzugten Fernsehnetzwerken, die in demselben Zeitschlitz (36) gespeichert sind, der dem aktuellen Zeitschlitz des Sehens entspricht, wobei der Prozessor (4) eine Zahl bezüglich der Sichtfrequenz (34) nur erhöht, wenn ein bestimmtes Fernsehnetzwerk für zumindest einen vorbestimmten Mindestzeitraum gesehen wurde.

9. Verfahren nach Anspruch 8, wobei das Verfahren umfasst weiter den Schritt des Berechnens der Sichtfrequenz (34) durch den Prozessor (4), während ein Fernsehnetzwerk angezeigt wird, und wobei das Verfahren ferner das Speichern der Informationen über das Fernsehnetzwerk in dem Speicher (5) durch den Prozessor (4) vorsieht, wenn das Fernsehnetzwerk auf der Anzeige (2) für mindestens eine vorbestimmte Mindestzeitdauer angezeigt worden ist, die insbesondere von einem Hersteller der Vorrichtung (1) eingestellt oder von einem Benutzer über eine Steuermenüeinrichtung der Vorrichtung (1) ausgewählt wurde.

10. Verfahren nach einem oder mehreren der vorherigen Verfahrensansprüche, wobei das Verfahren ferner das Speichern der Informationen über die bevorzugten Fernsehnetzwerke in dem Speicher (5) durch den Prozessor (4) vorsieht,
wobei die bevorzugten Fernsehnetzwerke eingestellt werden durch mindestens einen Tuner (14, 18) eines externen Fernsehempfängers (11, 15) und
wobei das Verfahren ferner das Steuern des mindestens einen Tuners (14, 18) des mindestens einen externen Fernsehempfängers (11, 15) durch den Prozessor (4) vorsieht.

11. Verfahren nach einem oder mehreren der vorherigen Verfahrensansprüche, wobei das Verfahren ferner das Steuern des Tuners (9, 14, 18) durch den Prozessor (4) derart vorsieht, dass er sich beim Einschalten der Vorrichtung (1) automatisch einstellt auf das bevorzugte Fernsehnetzwerk mit der höchsten Sichtfrequenz (34) unter allen bevorzugten Fernsehnetzwerken gespeichert in demselben Zeitschlitz (36) entsprechend dem aktuellen Zeitschlitz des Sehens.

12. Verfahren nach einem oder mehreren der vorhergehenden Verfahrensansprüche, wobei das Verfahren ferner vorsieht das Sortieren der bevorzugten Fernsehnetzwerke innerhalb jedes Zeitschlitzes (36) in absteigender Reihenfolge auf der Grundlage der Sichtfrequenz (34), und
wobei das Verfahren ferner vorsieht bei jeder Änderung des Fernsehnetzwerks das Anzeigen des Fernsehnetzwerks mit einer Sichtfrequenz (34) unmittelbar niedriger als diejenige des zuvor eingestellten bevorzugten Fernsehnetzwerks unter Berücksichtigung des Zeitschlitzes (36) entsprechend einer aktuellen Zeitschlitz des Sehens.

13. Computerprodukt, das in einen Speicher der Vorrichtung (1) geladen werden kann, mit Anweisungen, die zur Implementierung des Verfahrens nach einem oder mehreren der Ansprüche 8 bis 12 eingerichtet sind.

## Revendications

1. Appareil (1) adapté pour recevoir des signaux de télévision et pour sélectionner des réseaux de télévision préférés, comprenant :
- un processeur (4) pour commander les fonctions dudit appareil (1),
- un syntoniseur (9) pour au moins syntoniser ledit signal de télévision,
- un décodeur vidéo (6) pour décoder lesdits signaux de télévision afin d'au moins produire un signal vidéo,
- au moins une mémoire (5) pour stocker des informations concernant lesdits réseaux de télévision préférés,
- une horloge (10) pour compter le temps et synchroniser des instructions machine,
ledit appareil (1) comprenant ou étant adapté pour être connecté à un afficheur (2) pour reproduire lesdits signaux de télévision, dans lequel
- ledit processeur (4) stocke dans ladite mémoire (5) lesdites informations concernant lesdits réseaux de télévision préférés comprenant un numéro de réseau de télévision (30), un nom de réseau de télévision (32), une fréquence de vision (34) et des créneaux temporels prédéterminés (36) qui sont stockés dans la mémoire (5), dans lequel l'un desdits noms de réseau de télévision (32), l'une desdites fréquences de vision (34) et l'un desdits créneaux temporels (36) sont associés à chacun desdits numéros de réseau de télévision (30), et dans lequel ladite fréquence de vision (34) est subdivisée selon lesdits créneaux temporels prédéterminés (36), dans lequel les créneaux temporels sont choisis par l'utilisateur par le biais d'un menu de commande dudit appareil (1) selon ses préférences ;
- ledit processeur (4) permet de sélectionner ou d'afficher lesdits réseaux de télévision préférés sur ledit afficheur (2) d'après ladite fréquence de vision (34) et ledit créneau temporel (36) dans lequel ledit appareil (1) est utilisé,
l'appareil comprenant des moyens de commande qui, lors de l'émission d'un ordre spécifique, changent le réseau de télévision à afficher, et dans lequel ledit processeur (4) effectue le changement dudit réseau de télévision en agissant sur ledit syntoniseur (9, 14, 18), de telle sorte que ce dernier syntonisera un réseau de télévision préféré ayant une fréquence de vision plus haute ou plus basse, en fonction du signal de commande reçu, que celui précédemment affiché, parmi tous les réseaux de télévision préférés stockés dans le créneau temporel (36) correspondant au créneau temporel de vision actuel, dans lequel
le processeur (4) incrémentera uniquement un numéro relatif à la fréquence de vision (34) lorsqu'un certain réseau de télévision a été regardé pendant au moins un minimum de temps prédéterminé.

2. Appareil (1) selon la revendication 1, dans lequel ladite fréquence de vision (34) est calculée par ledit processeur (4) tandis qu'un utilisateur regarde un réseau de télévision.

3. Appareil (1) selon une ou plusieurs des revendications précédentes, dans lequel ledit processeur (4) stocke dans ladite mémoire (5) lesdites informations concernant la visualisation dudit réseau de télévision, si ledit réseau de télévision a été affiché sur ledit afficheur (2) pendant au moins une période de temps minimale prédéterminée, établie notamment par un fabricant dudit appareil (1) ou choisie par un utilisateur par le biais d'une fonction de menu de commande dudit appareil (1).

4. Appareil (1) selon une ou plusieurs des revendications précédentes, dans lequel ledit temps de vision actuel est fourni audit processeur (4) par ladite horloge (10).

5. Système (100) comportant un appareil (1) selon une ou plusieurs des revendications précédentes et au moins un récepteur de télévision externe (11, 15), dans lequel ledit appareil (1) est connecté audit au moins un récepteur de télévision externe (11, 15) par le biais de l'une d'une paire d'interfaces (7, 12 ; 8, 16), et
dans lequel ledit processeur (4) stocke dans la mémoire (5) lesdites informations concernant lesdits réseaux de télévision préférés syntonisés par un syntoniseur (14, 18) dudit récepteur de télévision externe (11, 15), ou
dans lequel ledit processeur (4) commande ledit syntoniseur (14, 18) dudit récepteur de télévision externe (11, 15) par le biais d'une connexion qui connecte lesdites interfaces (7, 12 ; 8, 16).

6. Système (100) selon la revendication 5, **caractérisé en ce qu'**il comprend un circuit de commutation (3) pour commuter lesdits signaux de télévision à reproduire sur un afficheur (2), qui achemine des signaux de commande provenant dudit processeur (4) vers au moins ledit récepteur de télévision externe (11, 15) par le biais de ladite une d'une paire d'interfaces (7, 12 ; 8, 16) et envoie audit afficheur (2), sous la commande dudit processeur (4), l'un des signaux vidéo disponibles au niveau de l'un desdits récepteurs de télévision externes (1, 11, 15).

7. Système (100) selon la revendication 5 ou 6, dans lequel ledit processeur (4) commande ledit syntoniseur (9, 14, 18) de manière à ce qu'il se syntonise automatiquement, lors de l'allumage dudit appareil (1), audit réseau de télévision préféré ayant ladite fréquence de vision (34) la plus haute parmi tous lesdits réseaux de télévision préférés stockés dans le créneau temporel (36) correspondant au créneau temporel de vision actuel.

8. Procédé adapté pour sélectionner des réseaux de télévision préférés, ledit procédé comprenant les étapes de :
- stockage dans une mémoire (5), par le biais d'un processeur (4), d'informations concernant lesdits réseaux de télévision préférés comprenant un numéro de réseau de télévision (30), un nom de réseau de télévision (32), une fréquence de vision (34) et un des créneaux temporels prédéterminés (36) qui sont stockés dans la mémoire (5), dans lequel l'un desdits noms de réseau de télévision (32), l'une desdites fréquences de vision (34) et l'un desdits créneaux temporels (36) sont associés à chacun desdits numéros de réseau de télévision (30), et dans lequel ladite fréquence de vision (34) est subdivisée selon des créneaux temporels prédéterminés (36), dans lequel les créneaux temporels sont choisis par l'utilisateur par le biais d'un menu de commande dudit appareil (1) selon ses préférences ;
- sélection puis affichage, par le biais dudit processeur (4), desdits réseaux de télévision préférés sur un afficheur (2) d'après ladite fréquence de vision (34) et ledit créneau temporel (36) dans lequel ledit appareil (1) est utilisé,
ledit procédé permettant en outre l'utilisation de moyens de commande qui, lors de l'émission d'un ordre spécifique, changent le réseau de télévision à afficher, et dans lequel ledit changement dudit réseau de télévision est effectué par syntonisation à un réseau de télévision préféré ayant une fréquence de vision (34) plus haute ou plus basse, en fonction du signal de commande reçu, que celui précédemment affiché, parmi tous lesdits réseaux de télévision préférés stockés dans le même créneau temporel (36) correspondant au créneau temporel de vision actuel, dans lequel
le processeur (4) incrémentera uniquement un numéro relatif à la fréquence de vision (34) lorsqu'un certain réseau de télévision a été regardé pendant au moins un minimum de temps prédéterminé.

9. Procédé selon la revendication 8, ledit procédé comprenant en outre l'étape de calcul de ladite fréquence de vision (34), par le biais dudit processeur (4), tandis qu'un réseau de télévision est affiché, et
ledit procédé permettant en outre le stockage dans ladite mémoire (5), par le biais dudit processeur (4), desdites informations concernant ledit réseau de télévision, si ledit réseau de télévision a été affiché sur ledit afficheur (2) pendant au moins une période de temps minimale prédéterminée, établie notamment par un fabricant dudit appareil (1) ou choisie par un utilisateur par le biais d'une fonction de menu de commande dudit appareil (1).

10. Procédé selon une ou plusieurs des revendications de procédé précédentes, ledit procédé permettant en outre le stockage dans ladite mémoire (5), par le biais dudit processeur (4), desdites informations concernant lesdits réseaux de télévision préférés, lesdits réseaux de télévision préférés étant syntonisés par au moins un syntoniseur (14, 18) d'un récepteur de télévision externe (11, 15), et
ledit procédé permettant en outre la commande, par le biais dudit processeur (4), dudit au moins un syntoniseur (14, 18) dudit au moins un récepteur de télévision externe (11, 15).

11. Procédé selon une ou plusieurs des revendications de procédé précédentes, ledit procédé permettant en outre la commande dudit syntoniseur (9, 14, 18), par le biais dudit processeur (4), de manière à ce qu'il se syntonise automatiquement, lors de l'allumage dudit appareil (1), audit réseau de télévision préféré ayant ladite fréquence de vision (34) la plus haute parmi tous lesdits réseaux de télévision préférés stockés dans le même créneau temporel (36) correspondant au créneau temporel de vision actuel.

12. Procédé selon une ou plusieurs des revendications de procédé précédentes, ledit procédé permettant en outre le tri desdits réseaux de télévision préférés, dans chaque créneau temporel (36) par ordre décroissant d'après ladite fréquence de vision (34), et
ledit procédé permettant en outre l'affichage, à chaque changement de réseau de télévision, dudit réseau de télévision ayant une fréquence de vision (34) immédiatement plus basse que celle dudit réseau de télévision préféré précédemment syntonisé, tout en prenant en compte ledit créneau temporel (36) correspondant à un temps de vision actuel.

13. Produit d'ordinateur qui peut être chargé dans une mémoire dudit appareil (1), comprenant des instructions adaptées pour mettre en œuvre le procédé selon une ou plusieurs des revendications 8 à 12.
